Europäisches Patentamt

European Patent Office

Office européen des brevets

(11) Veröffentlichungsnummer: **0 258 207 B1**

(12) **EUROPÄISCHE PATENTSCHRIFT**

(45) Veröffentlichungstag der Patentschrift: **21.08.91**

(51) Int. Cl.⁵: **F02B 31/00**

(21) Anmeldenummer: **87890180.0**

(22) Anmeldetag: **21.07.87**

(54) **Einlasskanal für Brennkraftmaschinen.**

(30) Priorität: **14.08.86 AT 2207/86**

(43) Veröffentlichungstag der Anmeldung:
**02.03.88 Patentblatt 88/09**

(45) Bekanntmachung des Hinweises auf die
Patenterteilung:
**21.08.91 Patentblatt 91/34**

(84) Benannte Vertragsstaaten:
**AT DE FR GB IT**

(56) Entgegenhaltungen:
**US-A- 4 292 944**
**US-A- 4 550 699**

**PATENT ABSTRACTS OF JAPAN, Band 4, Nr.**
**111 (M-25)[593], 9. August 1980, Seite 110 M**
**25; & JP-A-55 69 740 (TOYO KOGYO K.K.)**
**26-05-1980**

**PATENT ABSTRACTS OF JAPAN, Band 5, Nr.**
**6 (M-50)[678], 16. Januar 1981; & JP-A-55 139**
**924 (TOYO KOGYO K.K.) 01-11-1980**

**PATENT ABSTRACTS OF JAPAN, Band 10,**
**Nr. 375 (M-545)[2432], 13. Dezember 1986; &**
**JP-A-61 167 123 (MAZDA MOTOR CORP.)**
**28-07-1986**

**PATENT ABSTRACTS OF JAPAN, Band 9, Nr.**
**84 (M-371)[1807], 13. April 1985; & JP-A-59**
**213 925 (NISSAN JIDOSHA K.K.) 03-12-1984**

**PATENT ABSTRACTS OF JAPAN, Band 10,**
**Nr. 277 (M-519)[2333], 19. September 1986; &**
**JP-A-61 98 920 (NISSAN MOTOR CO., LTD)**
**17-05-1986**

(73) Patentinhaber: **AVL Gesellschaft für Verbren-**
**nungskraftmaschinen und Messtechnik**
**mbH.Prof.Dr.Dr.h.c. Hans List**
**Kleiststrasse 48**
**A-8020 Graz(AT)**

(72) Erfinder: **Quissek, Friedrich, Dipl.-Ing.**
**Roseggering 13**
**A-8054 Pirka(AT)**
Erfinder: **Glanz, Reinhard, Dipl.-Ing.**
**St.Peter-Hauptstr. 33c/3**
**A-8042 Graz(AT)**
Erfinder: **Trenner, Ulf, Ing.**
**Schillerstr. 35**
**A-8010 Graz(AT)**

(74) Vertreter: **Krause, Walter, Dr. Dipl.-Ing. et al**
**Postfach 200 Singerstrasse 8**
**A-1010 Wien(AT)**

EP 0 258 207 B1

## Beschreibung

Die Erfindung bezieht sich auf eine Brennkraftmaschine mit einem im Zylinderkopf angeordneten mit möglichst niedrigem Strömungswiderstand ausgelegten Einlaßkanal, der ein Saugrohr mit einem Zylinder verbindet und der durch eine in seiner Längsrichtung und parallel zur Zylinderachse verlaufende Trennwand, die sich in dem an den Einlaßkanal anschließenden Bereich des Saugrohres fortsetzt, in zwei Teilkanäle unterteilt ist, die sich erst im Ventilbereich wieder vereinigen, und wobei im Saugrohr kurz vor dessen Anschluß an den Einlaßkanal, der der Zylinderachse näherliegende Kanalteil mit einer Regelklappe verschließbar ist.

Eine Brennkraftmaschine der oben erwähnten Art ist in der US-PS 4 550 699 beschrieben. Diese bekannte Maschine hat vier Ventile pro Zylinder und zwei Trennwände im Einlaßkanal zur Führung des Gasgemisches, die direkt an den jeweiligen Ventilschaft bzw. an dessen Führung anschließen bzw. sich direkt von diesem bzw. von dieser erstrecken: Nachteilig bei dieser bekannten Anordnung ist, daß sowohl die Einströmung des Gemisches als auch die Drallbewegung wegen des Heranreichens der Endbegrenzung der Trennwand an die Führung des Ventilschaftes beeinträchtigt wird.

Ein anderes bekanntes Ansaugsystem ist in der DE-OS 33 47 112 beschrieben. Dabei ist eine horizontale Trennwand vorgesehen, die etwa senkrecht zur Ventilachse verläuft und einen Teillast-Einlaßkanal sowie einen Vollast-Einlaßkanal bildet, von denen der Teillast-Einlaßkanal an die Einlaßöffnung in einer weitgehend senkrecht zur Achse des Einlaßventils verlaufenden Richtung anschließt. Bei Teillast strömt das Gemisch unter Wirbelbildung in Umfangsrichtung zur Zylinderwand, wogegen bei Vollast das Gemisch in einer Richtung angenähert parallel zur Zylinderachse unter Vermeidung einer Wirbelbildung einströmt. Der Vollast-Einströmkanal ist durch eine im Einströmbereich dieses Kanals angeordnete Drosselklappe steuerbar, wogegen jener Kanal, der bei Teillast bzw. niedriger Drehzahl eine Drallströmung erzeugt, ständig offen ist.

Nachteilig ist bei dieser Ausführung, daß die Ausbildung eines Dralls im Zylinder nur sehr mangelhaft ist, weil das Gemisch über die gesamte Kanalbreite einströmt und das der Zylinderachse näher einströmende Gemisch unter ungünstigen Winkeln auf die Zylinderwandung trifft, sodaß es zur Drallbildung nur wenig oder nichts beiträgt. Das in der genannten DE-OS beschriebene Ansaugsystem wird also der Aufgabe, welche durch dieses System gelöst werden soll, daß nämlich im Teillastbetrieb ein starker Wirbel während des Ansaughubes erzeugt wird, nicht gerecht.

Der Erfindung liegt die Aufgabe zugrunde, die Nachteile der genannten bekannten Ansaugsysteme zu beheben und sie besteht darin, daß der Zylinderkopf ein einziges Einlaßventil und einen Einlaßkanal je Zylinder aufweist und die Endbegrenzung der Trennwand im Einlaßkanal unter Bildung eines Zwischenraumes bis in den Bereich des Einlaßventiles und höchstens bis nahe an den Ventilschaft bzw. dessen Führung reicht und wobei der Querschnitt des mittels der Regelklappe regelbaren Kanalteiles des Einlaßkanals höchstens 1/3 des Gesamtquerschnittes des Einlaßkanals beträgt. Der besondere Effekt dieser Ausbildung besteht darin, daß bei Abschließen der Regelklappe die Luft lediglich durch den größeren Kanalteil hindurchströmt und infolge der Trennwand in der der Zylindermitte abgewandten Seite des Ventilschaftes in die Ventilkammer eintritt, sodaß sie wie bei einem Spiralkanal um den Ventilschaft rotierend den Ventilspalt verläßt und zusätzlich durch Wechselwirkung mit der Zylinderwand maximaler Drall erreicht wird. Andererseits wird bei geöffnetem kleineren Kanalteil aufgrund der Kanalform bestmöglicher Durchfluß mit wenig oder kleinem Drall erreicht.

Wird für Teillast bzw. niedrige Drehzahl eine drallbehaftete Strömung gewünscht, so wird der eine Kanalteil mit der Regelklappe verschlossen. Der bei geschlossener Klappe größere Strömungswiderstand, bedingt durch den engeren Kanalquerschnitt, bringt sowohl bei Dieselmotoren als auch bei Ottomotoren keine Nachteile, da bei beiden Motorarten nur bei niedrigen Drehzahlen und beim Ottomotor insbesondere im Teillastbetrieb eine Drallströmung gewünscht ist, in Gebieten also, in denen wegen des absolut geringen Luftdurchsatzes die Strömungswiderstände kaum ins Gewicht fallen, sondern vielmehr von den Gemischbildungsvorteilen der drallbehafteten Strömung bei weitem kompensiert werden.

Soll hingegen bei höheren Drehzahlen - bei Ottomotoren in der Vollast - die bestmögliche Füllung des Zylinders erreicht werden, so wird die Klappe des einen kanalteils geöffnet und damit der gesamte Kanalquerschnitt freigegeben. Damit wird die Strömung um das Einlaßventil vergleichsmäßigt und eine bezüglich der Zylinderachse drallarme bzw. drallfreie Einströmung erzielt.

In weiterer Ausgestaltung der Erfindung kann die Trennwand im Bereich zwischen der Ventiltelleraußenbegrenzung und dem Ventilschaft enden und die gedachte Verlängerung der von der Zylinderachse abgewandten Seite der Trennwand den Ventilschaft an der der Zylinderachse abgewandten Seite tangieren. Es liegt so das überstreichbare Drallintervall auf hohem Drallniveau. Wenn die Trennwand bereits im Anschlußdurchmesserbereich endet, so liegt das überstreichbare Drallintervall auf niedrigerem Drallniveau. Bei der Kanalentwicklung wird also durch Verändern der Trennwandlänge im Bereich des Einlaßventiles sowohl die Weite des überstreichbaren Drallintervalls als auch die Höhe des Drallniveaus einzustellen sein.

Vorteilhaft wird, in weiterer Ausgestaltung der Erfindung, die Drehachse der Regelklappe in der Trennwand angeordnet und die Regelklappe steht im geöffneten Zustand in Richtung der Trennwand, sodaß sie keinen erheblichen zusätzlichen Strömungswiderstand bewirkt.

Von Vorteil kann auch sein, wenn der Bereich des Saugrohres, in welchem die Regelklappe gelagert ist, als ein vom übrigen Saugrohr getrennter Teil ausgebildet ist.

Im Rahmen der Erfindung kann die Einspritzdüse im Eingangsbereich des immer geöffneten Saugrohrabschnittes angeordnet sein, wodurch sich eine bessere Gemischaufbereitung ergibt, weil sich wegen Schließens des anderen Kanalteiles im Bereich der Einspritzdüse eine höhere Strömungsgeschwindigkeit einstellt.

Die Erfindung wird nachfolgend anhand der Zeichnung an einem Ausführungsbeispiel näher erläutert. Es zeigen:

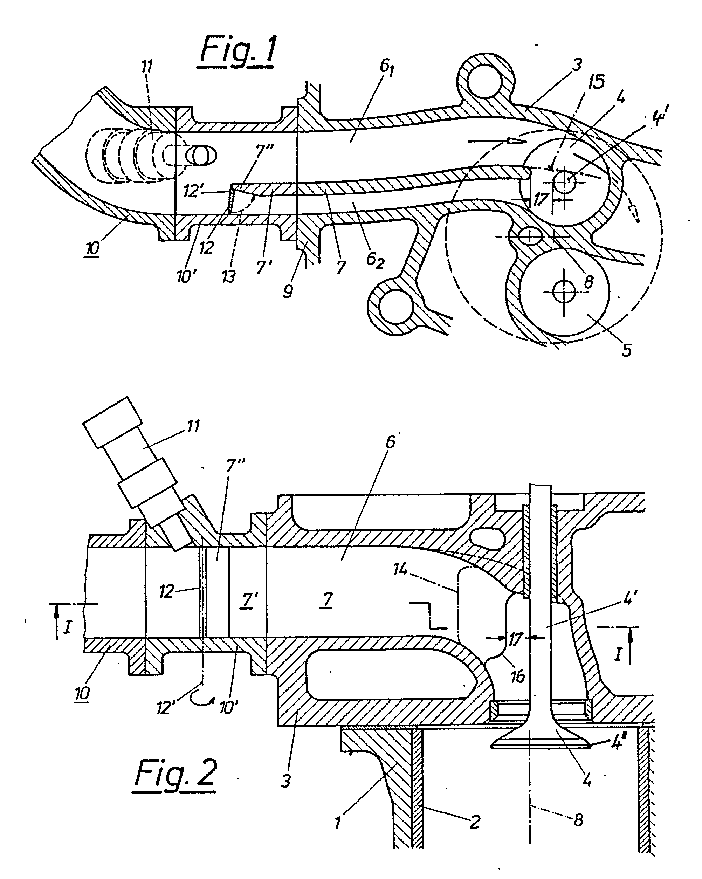

Fig. 1 einen Einlaßkanal der erfindungsgemäßen Brennkraftmaschine im Schnitt nach der Linie I-I in Fig. 2 und

Fig. 2 dazu einen Vertikalschnitt.

Auf dem Zylinderblock 1 mit eingesetzter Zylinderbüchse 2 sitzt der Zylinderkopf 3 der Brennkraftmaschine. Im Zylinderkopf 3 ist ein Einlaßventil 4 und ein Auslaßventil 5 angeordnet. Zum Einlaßventil 4 führt der in den Zylinderkopf 3 eingegossene Einlaßkanal 6, welcher durch die miteingegossene Trennwand 7 in die zwei Kanalteile $6_1$ und $6_2$ unterteilt wird. Die Trennwand 7 ist parallel zur Zylinderachse 8 angeordnet und erstreckt sich einerseits bis in den Bereich des Einlaßventils 4 und andererseits bis zum Anschlußbereich 9 des Saugrohres 10. Das Saugrohr 10 weist im Anschlußbereich einen separaten Teil 10' auf, in welchem sich die Trennwand 7 des Einlaßkanals 6 fortsetzt. Dieses Fortsetzungsstück ist mit 7' bezeichnet. Im separaten Teilstück 10' des Saugrohres 10 sind auch die Einspritzdüse 11 und die Regelklappe 12 angeordnet. Die Einspritzdüse 11 ist so angeordnet, daß der Kraftstoff in den Kanalteil $6_1$ eingespritzt wird. Letztere ist am konischen Ende 7" des Fortsetzungsstückes 7' der Trennwand 7 schwenkbar gelagert. Die Drehachse der Regelklappe 12 ist mit 12' bezeichnet.

Wenn diese Regelklappe 12 entsprechend dem Pfeil 13 ganz geöffnet wird, legt sie sich an den konischen Teil 7" des Fortsetzungsstückes 7' an, wobei sie wie ein Teil der Trennwand wirkt und keinen zusätzlichen Strömungswiderstand verursacht. Es ist auch eine Ausführung mit denselben Vorteilen denkbar, bei welcher die Regelklappe 12 durch Schwenken vom Zylinderkopf weg geöffnet und in der Offenstellung in Strömungsrichtung vor dem Fortsetzungsstück 7' der Trennwand 7 steht.

Die Länge der Trennwand 7 im Bereich des Einlaßventiles 4 bestimmt einerseits das Drallniveau bei geschlossener Klappe 12 und andererseits aber auch den Restdrall bei geöffneter Klappe 12. Je weiter diese Trennwand 7 in den Bereich des Einlaßventiles 4 vorgezogen ist, desto höher wird der Drall und Restdrall. Beim vorliegenden Ausführungsbeispiel befindet sich die Endbegrenzung 16 der Trennwand 7 zwischen der Ventiltelleraussenbegrenzung 4" und dem Ventilschaft 4'. Die gedachte Verlängerung 15 (strichpunktierte Linie) der von der Zylinderachse 8 abgewandten Seite der Trennwand 7 tangiert den Ventilschaft 4' an der der Zylinderachse 8 abgewandten Seite. Eine zweite Möglichkeit ist durch die strichpunktierte Begrenzungslinie 14 angedeutet, wobei die Trennwand 7 bereits im Anschlußdurchmesserbereich endet. Die Endbegrenzung 16 der Trennwand 7 befindet sich in ihrem Hauptbereich unter Bildung eines Zwischenraumes 17, in einem Abstand vom Ventilschaft 4', so daß eine einwandfreie Drallbildung bzw. Verwirbelung des Gemisches möglich ist.

**Patentansprüche**

1. Brennkraftmaschine mit einem im Zylinderkopf angeordneten mit möglichst niedrigem Strömungswiderstand ausgelegten Einlaßkanal (6), der ein Saugrohr (10) mit einem Zylinder verbindet und der durch eine in seiner Längsrichtung und parallel zur Zylinderachse (8) verlaufende Trennwand (7), die sich in dem an den Einlaßkanal (6) anschließenden Bereich (10') des Saugrohres (10) fortsetzt, in zwei Teilkanäle ($6_1$ , $6_2$) unterteilt ist, die sich erst im Ventilbereich wieder vereinigen, und wobei im Saugrohr (19) kurz vor dessen Anschluß (10') an den Einlaßkanal (6), der der Zylinderachse (8) näherliegende Kanalteil ($6_2$) mit einer Regelklappe (12) verschließbar ist, **dadurch gekennzeichnet,** daß der Zylinderkopf (3) ein einziges Einlaßventil (4) und einen Einlaßkanal (6) je Zylinder aufweist und die Endbegrenzung der Trennwand (7) im Einlaßkanal (6) unter Bildung eines Zwischenraumes (17) bis in den Bereich des Einlaßventiles (4) und höchstens bis nahe an den Ventilschaft (4') bzw. dessen Führung reicht und wobei der Querschnitt des mittels der Regelklappe (12) regelbaren Kanalteiles ($6_2$) des Einlaßkanals (6) höchstens 1/3 des Gesamtquerschnittes des Einlaßkanals (6) beträgt.

2. Brennkraftmaschine nach Anspruch 1, **dadurch gekennzeichnet,** daß die Trennwand (7) im Bereich zwischen der Ventiltelleraußenbegrenzung (4") und dem Ventilschaft (4') endet, und die gedachte Verlängerung (15) der von der Zylinderachse (8) abgewandten Seite der Trennwand (7) den Ventilschaft (4') an der der Zylinderachse (8) abgewandten Seite tangiert.

3. Brennkraftmaschine nach Anspruch 1 oder 2, **dadurch gekennzeichnet,** daß die Drehachse (12') der Regelklappe (12) in der Trennwand (7') angeordnet und die Regelklappe (12) im geöffneten Zustand in Richtung der Trennwand (7') steht.

4. Brennkraftmaschine nach einem der Ansprüche 1 bis 3, **dadurch gekennzeichnet,** daß der Bereich des Saugrohres (10), in welchem die Regelklappe (12) gelagert ist, als ein vom übrigen Saugrohr (10) getrennter Teil (10') ausgebildet ist.

5. Als Ottomotor mit Saugrohreinspritzung ausgebildete Brennkraftmaschine, nach einem der Ansprüche 1 bis 4, **dadurch gekennzeichnet,** daß die Einspritzdüse (11) im Eingangsbereich des immer geöffneten Saugrohrabschnittes ($6_1$) angeordnet ist.

## Claims

1. Internal combustion engine with an inlet passage (6) arranged in the cylinder head and designed to have the lowest possible resistance to flow, connecting an induction pipe (10) to a cylinder and divided into two part-passages ($6_1$, $6_2$) by a dividing wall (7) which extends in the direction of its length and parallel to the axis (8) of the cylinder and forms a continuation of the region (10') of the induction pipe (10) joined on to the inlet passage (6), the part-passages only coming together again in the region of the valve, and in the induction pipe (19) shortly ahead of its junction (10') with the inlet passage (6) the portion ($6_2$) of the passage which is nearer to the axis (8) of the cylinder is capable of being closed by a control flap (12), characterised in that the cylinder head (3) has a single inlet valve (4) and one inlet passage (6) per cylinder and the end of the dividing wall (7) in the inlet passage (6) reaches, with the formation of an intermediate space (17), up to the region of the inlet valve (4) and at most up to near the valve stem (4') or its guide, and the cross-section of the portion ($6_2$) of the inlet passage (6) which can be controlled by means of the control flap (12) amounts to at most one third of the overall cross-section of the inlet passage (6).

2. Engine according to claim 1 characterised in that the dividing wall (7) ends in the region between the outer periphery (4") of the valve head and the stem (4') of the valve and the notional extension (15) of that side of the dividing wall (7) which is furthest from the axis (8) of the cylinder is tangential to the valve stem (4') at that side of it that is furthest from the axis (8) of the cylinder.

3. Engine according to claim 1 or 2 characterised in that the pivotal axis (12') of the control flap (12) is arranged in the dividing wall (7') and the control flap (12), in its open position, extends in the direction of the dividing wall (7').

4. Engine according to one of claims 1 to 3 characterised in that the region of the induction pipe (10) in which the control flap (12) is mounted is formed as a portion (10') separate from the remainder of the induction pipe (10).

5. Engine constructed as a spark-ignition engine with fuel injection in the induction pipe, according to one of claims 1 to 4, characterised in that the injection nozzle (11) is arranged in the entry region of the permanently open portion ($6_1$) of the induction pipe.

## Revendications

1. Moteur à combustion interne avec un conduit d'admission (6) disposé dans la culasse et réalisé avec la plus faible perte de charge possible qui relie une pipe d'admission (10) avec un cylindre, et qui est sous divisé en deux conduits élémentaires ($6_1$,$6_2$) par une cloison de séparation (7) s'étendant dans le sens de sa longueur et parallèlement à l'axe (8) du cylindre, cloison qui se prolonge dans la zone (10') de la pipe d'admission (10) se raccordant au conduit d'admission (6), les conduits élémentaires se réunissant à nouveau dans la zone de la soupape et l'élément de conduit ($6_2$) se trouvant près de l'axe du cylindre (8), pouvant être obturé par un clapet de réglage (12) dans la pipe d'admission (19) peu avant son raccordement (10') au conduit d'admission (6), caractérisé en ce que la culasse (3) est pourvue d'une seule soupape d'admission (4) et d'un seul conduit d'admission (6) par cylindre et en ce que l'extrémité de la cloison de séparation (7) dans le conduit d'admission (6) s'étend, en formant un espace intermédiaire (17) puisque dans la zone de la soupape d'admission (4) et au maximum jusqu'à proximité de la tige de soupape (4') ou de son guidage, la section transversale de l'élément de conduit (6$_2$) du conduit d'admission (6) réglable au moyen du clapet de réglage (12) représentant au plus le tiers de la section totale du conduit d'admission (6).

2. Moteur à combustion interne selon la revendication 1, caractérisé en ce que la cloison de séparation (7) se termine dans la zone comprise entre la limite extérieure (4") de la tête de soupape et la tige de la soupape (4') et le prolongement virtuel (15) du côté de la cloison séparative de séparation(7) situé à l'opposé de l'axe (8) du cylindre tangente la tige de soupape (4') du côté opposé à l'axe du cylindre (8).

3. Moteur à combustion interne selon la revendication 1 ou 2, caractérisé en ce que l'axe de rotation (12") du clapet de réglage (12) est disposé dans la cloison séparative (7") et le papillon de commande (12) quand il est en position ouverte se trouve dans le sens de la cloison de séparation (7").

4. Moteur à combustion interne selon l'une des revendications 1 à 3, caractérisé en ce que la zone de la pipe d'admission (10), dans laquelle est monté le clapet de réglage (12) est formé comme une partie (10') distincte du reste de la pipe d'admission (10).

5. Moteur à carburation avec injection dans la pipe d'admission, selon l'une des revendications 1 à 4, caractérisé en ce que l'injecteur (11) est disposée dans la zone d'entrée de la section (6$_1$) de la pipe d'admission toujours ouverte.

_Fig.1_

_Fig.2_